# EUROPEAN PATENT SPECIFICATION

(11) **EP 2 195 769 B1**
(45) Date of publication and mention of the grant of the patent: **11.09.2013**
(21) Application number: 08807869.6
(22) Date of filing: 03.10.2008
(51) Int. Cl.: G06Q 20/32

(54) **METHOD BASED ON A SIM CARD PERFORMING SERVICES WITH HIGH SECURITY FEATURES**
VERFAHREN AUF DER BASIS EINER SIM-KARTE ZUM DURCHFÜHREN VON DIENSTEN MIT HOCHSICHERHEITSMERKMALEN
PROCÉDÉ BASÉ SUR UNE CARTE SIM POUR EFFECTUER DES SERVICES AYANT DES CARACTÉRISTIQUES DE SÉCURITÉ ÉLEVÉE

(30) Priority: 03.10.2007 EP 07117829
(43) Date of publication of application: 16.06.2010
(73) Proprietor: PosteMobile S.p.A., 00144 Rome (IT)
(72) Inventor: FUCCI, Francesco, I-00181 Roma (IT); GIACCHI, Roberto, I-00142 Roma (IT)
(74) Representative: Capasso, Olga
(86) International application number: PCT/IB2008/054047
(87) International publication number: WO 2009/044371

(56) References cited:
- EP-A- 1 804 418
- US-A1- 2002 037 722
- US-A1- 2002 137 545
- US-A1- 2005 277 432
- US-A1- 2006 224 470
- "and Turks with mobile signature programme" 1 April 2007 (2007-04-01), CARD TECHNOLOGY TODAY, ELSEVIER, PAGE(S) 6 , XP022062595 ISSN: 0965-2590 the whole document
- "VODAPHONE OFFERS SIM UPGRADE"[Online] 2004, - 2004 XP002480098 Retrieved from the Internet: URL:http://web.archive.org/web/20040622095 112/http://www.gsmmobile.co.nz/Sim_Toolkit .htm> [retrieved on 2008-05-14]
- DATABASE WPI Week 200715 Thomson Scientific, London, GB; AN 148110 XP002480099 "Framework and method for dynamic STK menu downloading - which is more convenient for the client to use the value-added services, and raises the confidence of the user" & TW 239 758 B ((TRAN-N) TRANSASIA TELECOM INC) 11 September 2005 (2005-09-11)

## Description

The present invention relates to a method to execute secure and high performance banking, economic, financial and postal transactions via a mobile telephone terminal communicating over the air with ciphered messages. The invention also relates to a SIM card and to a system capable of implementing the method. The SIM card of the invention is inserted in the mobile terminal and allows communication using the GSM and UMTS networks, fully widespread over almost the entire earth's surface. The method of the invention enables financial, banking and postal services to be performed, hereinafter referred to as "distinctive VAS - Value Added Services", as exemplified hereinbelow in a non-exhaustive list:
- refill your pre-paid phone credit by charging an associated payment instrument (e.g. pre-paid credit card, post-paid credit card, current account or postal paying-in slip);
- refill another beneficiary pre-paid phone credit by charging a payment instrument associated with the applicant (e.g. pre-paid credit card, post-paid credit card, current account or postal paying-in slip);
- request information about account balance and transaction list for a payment instrument such as a pre-paid and post-paid credit card or a bank account;
- transfer of money between its own payment instruments (e.g. pre-paid credit card, post-paid credit card or bank account);
- transfer of money to another financial organisation (e.g. another bank, different from that associated with the payment instruments);
- payment of bills with postal paying-in slips using a payment instrument (e.g. pre-paid credit card, post-paid credit card or bank account);
- request of postal services charged to a payment instrument (e.g. SIM pre-paid credit, telephone post-paid bill, pre-paid credit card, post-paid credit card, bank account or postal paying-in slip). Examples of postal services are: telegram, tracking deliveries, MMS postcard and SMS tickets;
- micropayments and electronic payments of consumer goods, in respect of suppliers of partner services and products, charged to a payment instrument (e.g. pre-paid credit card, post-paid credit card or bank account).

US2005/0277432 refers to a SIM has a memory, a processor and the ability to interact with the user. The SIM has a Dynamic Interpreter application that extends the functionality of a STK (SIM toolkit framework) application by enabling a mobile network operator to add dynamic menus to a STK application on the user device. Consequently an application developer is able to optimize the performance of a STK application by splitting the storage of data used to render a menu on the user device between the SIM and the dynamic application server on the network.

The communication *"...and Turks with mobile signature programme" Card Technology Today April 2007* refers to a SIM-based identification solution to implement a large- scale mobile signature program, allowing users to perform secure online transactions through their handset, anytime, anywhere. The SIM card checks the secret code, creates the digital signature and sends it to the addressee for example the bank to enable the corresponding transaction on the banking account bank. The SIM card creates the secret keys itself when an activation request is made by the operator.

The method of the invention and the related SIM card can guarantee for each distinctive VAS the five essential security requirements of a financial transaction:
1. Privacy: guarantee that the content and meaning of the communication are not divulged to unauthorised persons;
2. Integrity: ensure detection by the recipient of any interference with the original message generated by the user;
3. Authentication: ensure that all the parties involved in a communication are recognised with certainty;
4. Authorisation: guarantee that the body requesting performance of an operation is authorised to do so within the specific context;
5. Non-denial: guarantee that, having performed a service, in particular a transaction, neither the recipient nor the user can deny having taken part therein.
   The memory of the SIM card is partitioned into two logic reserved areas in order to store security applications implementing a combination of hashing algorithms, symmetric and asymmetric cryptography algorithms and algorithms for initialization and memorization of encryption keys (on board key generation process). In addition to this level of security, aimed to the data transfer securization, a further degree of security has been created to access and authenticate the financial transactions using a user PIN managed with other security algorithms.

The set and combination of these technical applications, developed directly in the SIM card at the manufacturing stage allow to perform services with simple and secure access.

The current invention provides an instrument capable of performing functions which to date remained specific to banking and/or postal systems.

The method of the invention allows a registered user to perform operations and request banking and financial services comfortably and securely from his or her mobile terminal.

The SIM card of the method of the present invention, in addition to the usual functions (phone calls, exchange of messages, WAP and Internet surfing) permits banking/financial functions which to date implied the physical presence of the user in a post office, in a bank or in front of a computer terminal connected to the Internet. Whoever has a second or third-generation mobile terminal, a telephone subscription with the operator of the SIM card and a payment instrument (e.g. pre-paid and post-paid credit card, bank account associated to the SIM card) can perform financial operations at any time, in a secure manner and with a few simple steps, by sending encrypted messages.

The memory of the SIM card is basically partitioned into two areas:
a) a first area dedicated to the network, managed securely by the mobile telephony operator and occupied by the operating system and by the file system structure, by the system area necessary for voice communication and SMS, by the phone book and by the same SMS text messages;
b) a second area dedicated to proprietary "distinctive VAS" housing, as essential components: the security algorithms; the code of the distinctive Value Added Services (VAS); and a dynamic SIM toolkit (DSTK). The DSKT ensures a dynamic update of the VAS services for each client transferring the application logic on demand from a dedicated and remote server component named Over The Air (OTA) Server Platform, see also below.

The method of the invention implements the following functions for the management of security: dynamic generation of asymmetric keys; creation, modification and verification of PMPIN; encryption and decryption of data transfers; digital signature. An object of the invention is a method for performing added value services VAS with a very high level of security by means of communication by plug-in on a SIM card, said SIM card having a memory M partitioned into two independent areas, one for managing the basic telephony services and another for safely storing and securing proprietary data, enabling the ciphering application for a VAS, such areas are:
a) a first area dedicated to the network, managed in a secure manner also in respect of the mobile telephony operator and occupied by the operating system and by the structure of the file system, by the system area necessary for voice and SMS communications, by the phone book and by the same SMS text messages;
b) a second area dedicated to VAS housing, having as essential components: the plug-in for performance of the security algorithms, being a combination of hashing algorithms, symmetric and asymmetric cryptography algorithms and algorithms for initialization and memorization of encryption keys; the code of the added-value services VAS; a verification code as a proof of possession POP; a dynamic SIM toolkit DSTK; said method comprising the following phases:
   a) initialisation of an encryption system at first access via:
      i) entry of a verification code PoP as a proof of possession issued during purchase of said SIM card;
      ii) generation of an order PIN code to be associated with every confidential service in respect of central system;
      iii) generation directly on the SIM card of a pair of asymmetric keys, one private and one public, to be used for a digital signature;
      iv) sending of the public key via an encrypted message to a certification authority CA, in order to create a digital certificate to be filed and used for all subsequent communications;
   b) use of the encryption system for the sending of messages relating to the services via:
      i) request for the service by browsing the services menu on the SIM card and entry of the data and information necessary for performance;
      ii) entry of the order PIN for authorising the service;
      iii) production of a digest of the message via a hash algorithm;
      iv) signature of said digest via an asymmetric algorithm;
      v) encryption of the digital signature and of the initial message via an AES algorithm;
      vi) sending of the encrypted message via binary SMS text messages and via an OTA communication platform of the service request to the central systems;
      vii) decryption of the SMS text message via a call to the CA for validation of the user and of the correctness of the message and subsequent reply from the CA for authorisation for performance of the service.

The pair of asymmetric keys is preferably 1024 bit.

The encrypted message containing the public key and the certificate request is preferably in the security standard PKCS#10.

The digest of the message is produced preferably by means of a hash algorithm SHA-1.

The digest is preferably signed by means of an asymmetric algorithm RSA with 1024 bit key.

The digital signature and initial message are preferably encrypted by means of a symmetric key AES algorithm, more preferably 128 bit.

The method advantageously permits flexibility and differentiation of the security level as a function of the service requested, allowing association of the most appropriate security level as a function of the secrecy, confidentiality and financial value.

In fact, in addition to the security criteria used for transmission of the data which enable secure services to be performed, the system has a further security level to access to the services by the user. This is obtained managing on the SIM card a further specific PIN code for authorize the services (PMPIN), used both to launch the mechanisms of digital signature and encryption of the data and to be able to request and confirm the order operations on the payment instrument.

It is therefore possible to set in the safety specifications a single level and a double level: the double level requires entry of the PMPIN twice during some services request/response interactions, for example transactions (request phase and transaction confirmation phase); the single level requires entry of the PMPIN once (confirmation phase).

The present invention will be described by way of non-limiting examples.

### Description of the drawings

Fig. 1 - Diagram of the process of generation of the SIM card.
Fig. 2 - Schematic representation of the mechanism of first access to the distinctive VAS.
Fig. 3 - Diagram of the management of security in communications.
Fig. 4 - Diagram of communication in the micropayment service.
Fig. 5 - Diagram of use of the distinctive VAS.

### Macro processes of generation of the SIM card and activation of services

### 1) Production of the SIM card

The first phase of the process is that of generation of SIM cards on which the following are present:
- a specific symmetric key for each SIM, associated with its ICCID (integrated circuit card ID), a key obtained with an algorithm certified in pseudo-random mode to ensure the impossibility of regenerating the sequence of keys generated;
- a PoP (proof of possession) verification code, used only for the first access, to guarantee that the first user who is to create the PMPIN is the person who has purchased the SIM and who knows the secret initial code received with the packaging of the same SIM.

### 2) Despatch of codes

As mentioned previously, the algorithm for random calculation of the keys is also certified (in accordance with the standard FIPS140). On the basis of the rule, the vendor of the SIM card (SIM vendor) generates a symmetric key for each SIM produced and creates an output file with the ICCID - symmetric key correspondences. The output file contains internally the symmetric keys in an encrypted form (by means of a predefined set of other symmetric keys used exclusively for this purpose) and is sent, via encrypted communication, to the CA for each production batch.

On receipt the CA processes the file and maintains the association within its systems (in turn certified and secure) for all the SIM cards produced in order to use the symmetric keys of the SIM cards during the encryption, decryption and verification of the digital signature of a specific SIM (ICCID), as backing for the supply of the services.

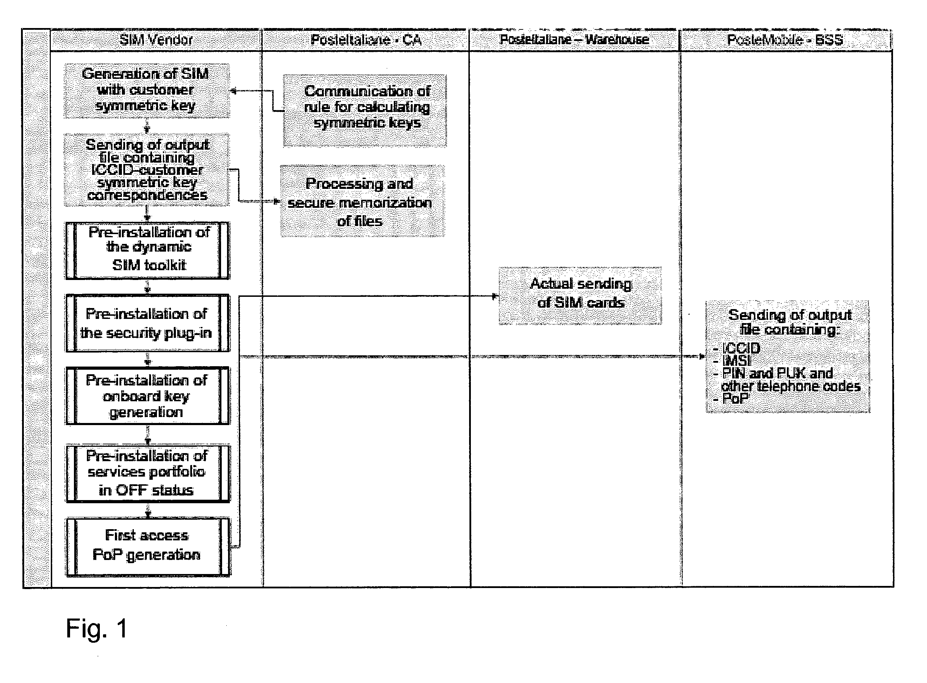

The process of generation of the SIM card is illustrated in Figure 1.

### 3) First access

On network activation of the SIM, the portfolio of the banking and postal services is configured (remote and via OTA) according to the user profile.

On first access to one of these services, the user, after having entered the PoP, is guided during generation of the PMPIN order PIN and the process of generation of the asymmetric keys is then launched via the mechanism on the SIM of OnBoardKeyGeneration (OBKG). The PMPIN will be requested to authorize all the banking and financial services which are to related to a payment instrument.

After the PMPIN verification, the SIM encrypts, signs and sends the information for the security communications, to the back-end systems of the provider of banking and postal services. The security information sent by the application on the SIM is:
- the client public key transferred via the standard PKCS#10
- the specific identifier of the SIM (ICCID).

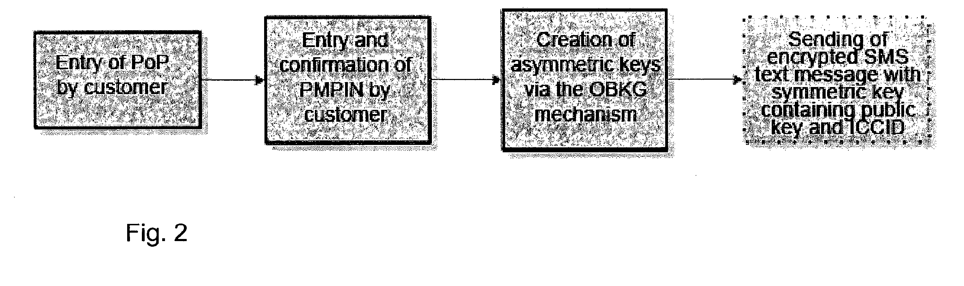

Figure 2 is a schematic representation of what is described.

### 4) Use of the services

Subsequent to creation of the SIM and to activation of the banking and postal services, communication between the terminal and the back-ends of the provider takes place via signed and encrypted SMS text messages.

Before communication the following two successive phases are performed:
1. Electronic signature with private user key following entry of the PMPIN;
2. Encryption of the text with the symmetric encryptography key associated with the user.

In the same way the reply communication between the back-end systems of the provider of the service and the terminal is based on the same mechanism. In this case the encryption of the communication involves encryption of the text with the symmetric key associated with the SIM, guaranteeing that sensitive information on the outcome of the services, in particular transactions, are confidential and accessible solely by the user of the SIM.

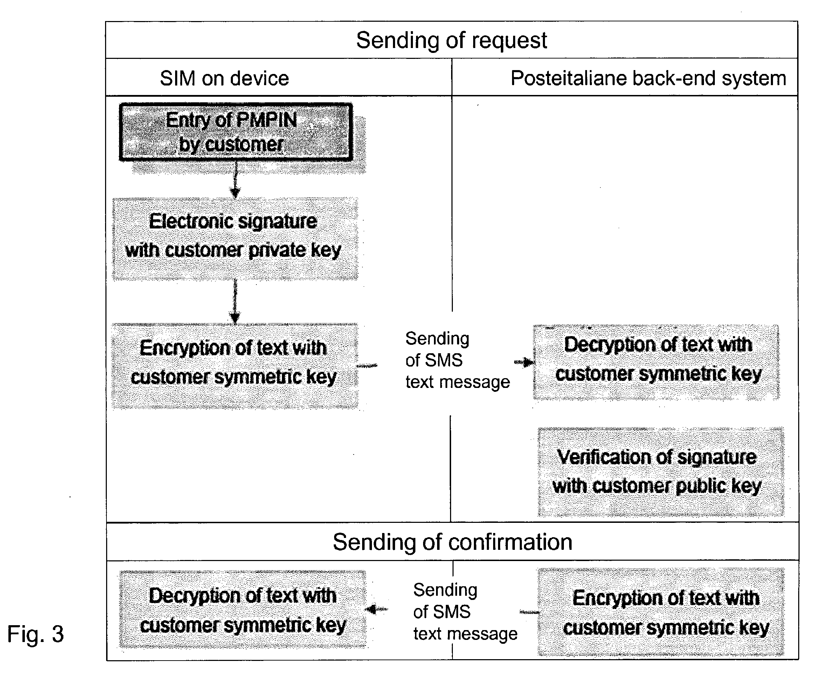

Figure 3 is a schematic representation of the management of the security of the communications.

### Example of use of a distinctive VAS

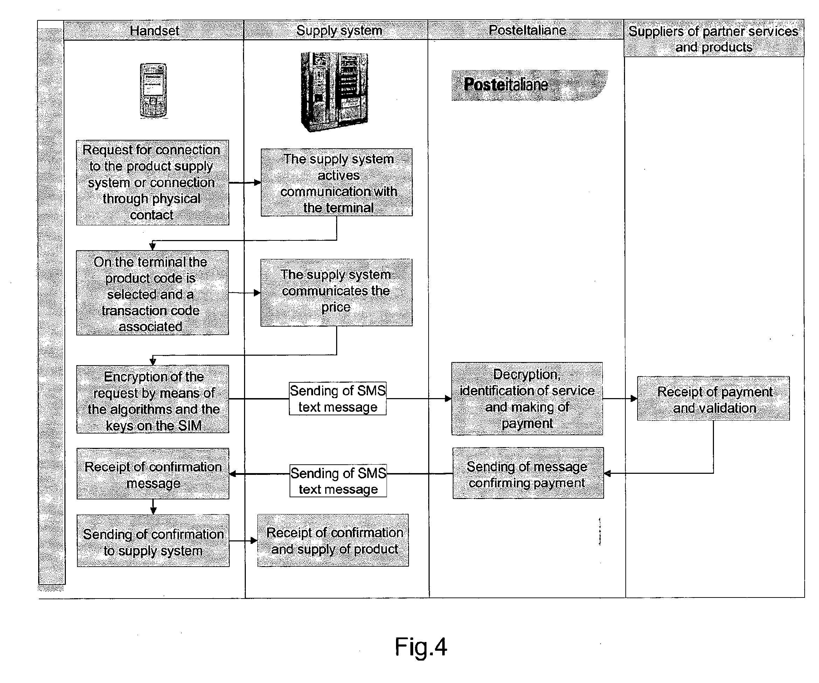

Figure 4 is a diagram of communication in the micropayment service.

It was decided to analyse the service of transfer of money between payment instruments (e.g. the Postepay pre-paid credit card). The service consists of a transfer of money from the card of a payer to the card of a beneficiary, identified by the mobile telephone number.

The simple steps which the payer has to perform to carry out the operation indicated are the following:
1. select the service by entering the SIM menu;
2. key in the amount to be paid;
3. enter the telephone number of the beneficiary, also obtaining it from the phone book;
4. enter the PMPIN.

The payer and the beneficiary receive a message which indicates the outcome of the operation.

After entry of the PMPIN during confirmation (point 4), the security plug-in algorithms, on the SIM card, are requested which allow the digital signature and encryption of the message.

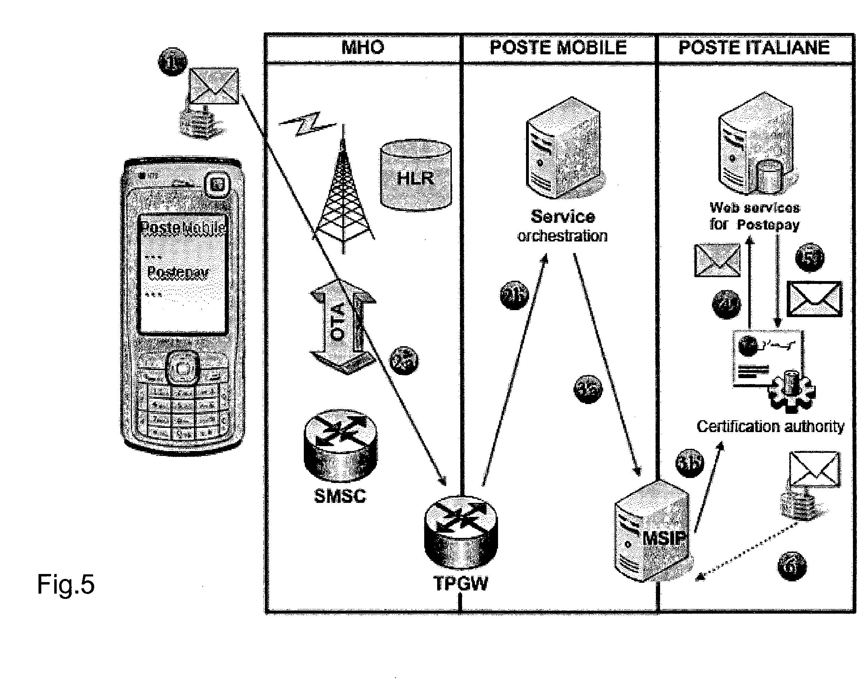

Figure 5 illustrates the process as described below:
1. The message is signed and encrypted following calling-up of the security plug-in on the mobile terminal;
2. the message is sent to the platform of the provider of distinctive VAS (in this example Poste Mobile);
3. the provider of distinctive VAS recognises a request for distinctive service and forwards it to the CA (in this example Poste Italiane) for decryption and verification of the digital signature;
4. subsequently the message is decrypted; once decrypted the message is forwarded to the systems of payment for verification and calculation of the cost of the operation;
5. a confirmation message is returned containing all the information requested;
6. the answer is once again encrypted and returned to the user.

Figure 5 does not show the reverse flow; this flow repeats the stages of the direct flow.

The intent is to underline how communication between the various components of the system remains in any case transparent to the user who simply has to choose the beneficiary, the type of distinctive VAS which he or she wants to use, possibly the sum to be paid, and send the message. As a consequence of these actions the user will receiver on his or her own terminal a confirmation message which contains the code of the operation performed by him or her. In the case of a financial transaction a further message of notification of crediting of the current account is also sent to the beneficiary of the transfer.

## Claims

1. Method for performing added value services VAS with a very high level of security by means of communication by plug-in on a SIM card, said SIM card having a memory M partitioned into two independent areas, one for managing the basic telephony services and another for safely storing and securing proprietary data, enabling the ciphering application for a VAS, such areas are:
a) a first area dedicated to the network, managed in a secure manner also in respect of the mobile telephony operator and occupied by the operating system and by the structure of the file system, by the system area necessary for voice and SMS communications, by the phone book and by the same SMS text messages;
b) a second area dedicated to VAS housing, having as essential components: the plug-in for performance of the security algorithms, being a combination of hashing algorithms, symmetric and asymmetric cryptography algorithms and algorithms for initialization and memorization of encryption keys; the code of the added-value services (VAS); a verification code as a proof of possession POP; a dynamic SIM toolkit DSTK; said method, comprising the following phases:
a) initialisation of a system of encryption at first access by means of:
i) entry of a verification code as proof of possession PoP issued during purchase of said SIM card;
ii) generation of an order PIN code to be associated with each confidential service in respect of central system;
iii) generation directly on the SIM card of a pair of asymmetric keys, one private and one public, to be used for the digital signature;
iv) sending of the public key via an encrypted message to a certification authority (CA) in order to create a digital certificate to be filed and used for all subsequent communications;
b) use of the encryption system for sending messages relating to the services by means of:
i) request for the service by browsing the services menu on the SIM card and entry of data and information required for performance;
ii) entry of the order PIN for authorising the service;
iii) production of a digest of the message by means of a hash algorithm;
iv) signature of said digest by means of an asymmetric algorithm;
v) encryption of the digital signature and of the initial message by means of an AES algorithm;
vi) sending of the encrypted message via binary SMS text messages and by means of the OTA communication platform of the service request to the central system;
vii) decryption of the SMS text message via a call to the CA for validation of the user and of the correctness of the message and subsequent answer from the CA for authorisation for performance of the service.

2. Method according to claim 1 wherein the pair of asymmetric keys is 1024 bit.

3. Method according to claim 1 or 2 wherein the encrypted message of the public key is in the security standard PKCS#10.

4. Method according to one of claims 1 to 3 wherein the digest of the message is produced by means of a hash algorithm SHA-1.

5. Method according to one of claims 1 to 4 wherein the digest is signed by means of an RSA asymmetric algorithm with 1024 bit key.

6. Method according to one of claims 1 to 5 wherein encryption of the digital signature and of the initial message takes place via a symmetric key AES algorithm.

7. Method according to claim 6 wherein the symmetric key AES algorithm is 128 bit.

## Patentansprüche

1. Verfahren zur Durchführung von Mehrwertdiensten VAS mit einer sehr hohen Sicherheitsstufe mittels Kommunikation durch Plug-in auf einer SIM-Karte, wobei die SIM-Karte einen Speicher M aufweist, der in zwei unabhängige Bereiche partitioniert ist, einen zum Verwalten der Basistelefondienste und einen anderen zum sicheren Speichern und Sichern von proprietären Daten, der die Verschlüsselungsanwendung für einen VAS ermöglicht, wobei diese Bereiche Folgende sind:
a) ein erster Bereich, der dem Netzwerk gewidmet ist, außerdem in Bezug auf den Mobiltelefonbetreiber sicher verwaltet wird und durch das Betriebssystem und durch die Struktur des Dateisystems, durch den für Sprach- und SMS-Kommunikationen erforderlichen Systembereich, durch das Telefonbuch und durch gleichen SMS-Textnachrichten belegt ist;
b) ein zweiter Bereich, welcher der VAS-Aufnahme gewidmet ist und als wesentliche Komponenten Folgende aufweist: das Plug-in zur Ausführung der Sicherheitsalgorithmen, die eine Kombination von Hash-Algorithmen, symmetrischen und asymmetrischen Kryptographie-Algorithmen und Algorithmen zur Initialisierung und Speicherung von Verschlüsselungsschlüsseln sind; den Code der Mehrwertdienste (VAS); einen Verifizierungscode als einen Besitznachweis POP; einen dynamischen SIM-Toolkit DSTK; wobei das Verfahren die folgenden Phasen aufweist:
b) Initialisierung eines Verschlüsselungssystems beim ersten Zugriff durch:
i) Eingeben eines Verifizierungscodes als Besitznachweis PoP, der beim Kauf der SIM-Karte erteilt wird;
ii) Erzeugen eines Bestell-PIN-Codes, der jedem vertraulichen Dienst in Bezug auf ein zentrales System zugeordnet werden soll;
iii) Erzeugen direkt auf der SIM-Karte eines Paares von asymmetrischen Schlüsseln, einem privaten und einem öffentlichen, die für die digitale Signatur verwendet werden sollen;
iv) Senden des öffentlichen Schlüssels über eine verschlüsselte Nachricht an eine Zertifizierungsstelle (CA), um ein digitales Zertifikat zu erstellen, das für alle folgenden Kommunikationen eingereicht und verwendet werden soll;
b) Verwendung des Verschlüsselungssystems zum Senden von Nachrichten in Bezug auf die Dienste durch:
i) Anfordern des Dienstes durch Durchsuchen des Dienstemenüs auf der SIM-Karte und Eingeben von Daten und Informationen, die zur Durchführung erforderlich sind;
ii) Eingeben des Bestell-PIN-Codes zum Autorisieren des Dienstes;
iii) Erzeugen eines Digests der Nachricht mittels eines Hash-Algorithmus;
iv) Signieren des Digests mittels eines asymmetrischen Algorithmus;
v) Verschlüsseln der digitalen Signatur und der Initialisierungsnachricht mittels eines AES-Algorithmus;
vi) Senden der verschlüsselten Nachricht über binäre SMS-Textnachrichten und mittels der OTA-Kommunikationsplattform der Dienstanforderung an das zentrale System;
vii) Entschlüsseln der SMS-Textnachricht über einen Anruf an die CA zur Validierung des Benutzers und der Korrektheit der Nachricht und anschließendes Antworten der CA zur Autorisierung zur Durchführung des Dienstes.

2. Verfahren nach Anspruch 1, wobei das Paar von asymmetrischen Schlüsseln 1024 Bit ist.

3. Verfahren nach Anspruch 1 oder 2, wobei die verschlüsselte Nachricht des öffentlichen Schlüssels im Sicherheitsstandard PKCS#10 ist.

4. Verfahren nach einem der Ansprüche 1 bis 3, wobei der Digest der Nachricht mittels eines Hash-Algorithmus SHA-1 erzeugt wird.

5. Verfahren nach einem der Ansprüche 1 bis 4, wobei der Digest mittels eines symmetrischen RSA-Algorithmus mit einem 1024-Bit-Schlüssel signiert wird.

6. Verfahren nach einem der Ansprüche 1 bis 5, wobei die Verschlüsselung der digitalen Signatur und der Initialisierungsnachricht über einen symmetrischen AES-Schlüsselalgorithmus erfolgt.

7. Verfahren nach Anspruch 6, wobei der symmetrische AES-Schlüsselalgorithmus 128 Bit ist.

## Revendications

1. Procédé pour effectuer des services de valeur ajoutée, VAS, avec un très haut niveau de sécurité au moyen d'une communication par plug-in sur une carte SIM, ladite carte SIM ayant une mémoire M partitionnée en deux zones indépendantes, une pour gérer les services de téléphonie de base et l'autre pour mémoriser en toute sécurité et sécuriser des données propriétaires, en activant l'application de chiffrement pour un VAS, de telles zones étant :
a) une première zone dédiée au réseau, gérée d'une manière sécurisée également par rapport à l'opérateur de téléphonie mobile et occupée par le système d'exploitation et par la structure du système de fichiers, par la zone de système nécessaire pour des communications vocales et de SMS, par l'annuaire téléphonique et par les mêmes messages de texte de SMS ;
b) une deuxième zone dédiée à l'hébergement de VAS, comportant comme composants essentiels : le plug-in pour l'exécution des algorithmes de sécurité, étant une combinaison d'algorithmes de hachage, d'algorithmes de cryptographie symétrique et asymétrique et d'algorithmes pour l'initialisation et la mémorisation de clés de cryptage ; le code des services de valeur ajoutée, VAS ; un code de vérification comme preuve de possession, POP ; un kit d'outillage de SIM dynamique, DSTK ; ledit procédé comprenant les phases suivante :
a) l'initialisation d'un système de cryptage au premier accès au moyen de :
i) l'entrée d'un code de vérification comme preuve de possession, PoP, émis au cours de l'achat de ladite carte SIM ;
ii) la génération d'un code secret de commande à associer à chaque service confidentiel par rapport à un système central ;
iii) la génération directement sur la carte SIM d'une paire de clés asymétriques, l'une privée et l'autre publique, à utiliser pour la signature numérique ;
iv) l'envoi de la clé publique par l'intermédiaire d'un message crypté à une autorité de certification, CA, afin de créer un certificat numérique à enregistrer et à utiliser pour toutes les communications suivantes ;
b) l'utilisation du système de cryptage pour l'envoi de messages relatifs aux services au moyen de :
i) la demande du service en naviguant dans le menu de services sur la carte SIM et l'entrée de données et d'informations nécessaires à l'exécution ;
ii) l'entrée du code secret de commande pour autoriser le service ;
iii) la production d'un résumé du message au moyen d'un algorithme de hachage ;
iv) la signature dudit résumé au moyen d'un algorithme asymétrique ;
v) le cryptage de la signature numérique et du message initial au moyen d'un algorithme AES ;
vi) l'envoi du message crypté par l'intermédiaire de messages de texte SMS binaires et au moyen de la plate-forme de communication OTA de la demande de service au système central ;
vii) le décryptage du message de texte SMS par l'intermédiaire d'un appel au CA pour la validation de l'utilisateur et de l'exactitude du message et la réponse suivante du CA pour l'autorisation de l'exécution du service.

2. Procédé selon la revendication 1, dans lequel la paire de clés asymétriques est de 1024 bits.

3. Procédé selon la revendication 1 ou 2, dans lequel le message crypté de la clé publique est à la norme de sécurité PKCS#10.

4. Procédé selon l'une des revendications 1 à 3, dans lequel le résumé du message est produit au moyen d'un algorithme de hachage SHA-1.

5. Procédé selon l'une des revendications 1 à 4, dans lequel le résumé est signé au moyen d'un algorithme asymétrique RSA avec une clé de 1024 bits.

6. Procédé selon l'une des revendications 1 à 5, dans lequel le cryptage de la signature numérique et du message initial s'effectue par l'intermédiaire d'un algorithme AES de clé symétrique.

7. Procédé selon la revendication 6, dans lequel l'algorithme AES de clé symétrique est de 128 bits.
